# EUROPÄISCHE PATENTSCHRIFT

(11) **EP 1 302 683 B1**
(45) Veröffentlichungstag und Bekanntmachung des Hinweises auf die Patenterteilung: **10.08.2005**
(21) Anmeldenummer: 02020914.4
(22) Anmeldetag: 19.09.2002
(51) Int. Cl.: F16C 33/60, F16C 35/073

(54) **Wälzlager**
Rolling contact bearing
Palier à contact de roulement

(30) Priorität: 10.10.2001 DE 20116649 U
(43) Veröffentlichungstag der Anmeldung: 16.04.2003
(73) Patentinhaber: AB SKF, S-415 50 Göteborg (SE)
(72) Erfinder: Olschewski, Armin, 97422 Schweinfurt (DE); Neder, Günter, 97422 Schweinfurt (DE); Göbel, Werner, 97490 Poppenhausen (DE); Faltus, Barbara, 97469 Gochsheim (DE)
(74) Vertreter: Gosdin, Michael

(56) Entgegenhaltungen:
- DE-U- 7 338 366
- FR-A- 648 332
- US-A- 4 784 438
- PATENT ABSTRACTS OF JAPAN vol. 015, no. 085 (M-1087), 27. Februar 1991 (1991-02-27) -& JP 02 304216 A (NTN CORP), 18. Dezember 1990 (1990-12-18)

## Beschreibung

Die Erfindung betrifft ein Lager, insbesondere ein Wälzlager, mit mindestens einem Außenring und mindestens einem Innenring, wobei mindestens einer der Ringe durch Segmente gebildet wird.

Ein Segmentlager der eingangs genannten Art ist beispielsweise aus der **DE 73 38 366 U1** bekannt. Der Innenring und/oder der Außenring bestehen hier aus jeweils zwei halbkreisförmigen Lagersegmenten. Diese werden in einem geeigneten Trägergehäuse positioniert und fixiert, so dass sich ein weitgehend ungestörter Lauf des Wälzlagers ergibt. Zur Einstellung und Fixierung der beiden zusammenwirkenden Lagersegmente, die zusammen einen Lagerring bilden, sind Schrauben und Muttern vorgesehen, die zwischen Gehäuse und Lagersegmenten angebracht werden.

Die **FR 648 332 A** offenbart ein segmentiertes Wälzlager mit Innen- und Außenring. Zumindest einer der Lagerringe ist dabei mit einer Schraubverbindung derart ausgestaltet, dass es möglich ist, ihn auf das gewünschte Maß einzustellen. In der **JP 02304216 A** wird gleichermaßen ein Wälzlager beschrieben, dessen Lagerringe aus mehreren Lagersegmenten bestehen.

Insbesondere beim Einsatz in modernen Windenergieanlagen hat es sich als problematisch erwiesen, Lager, deren Ringe mehrere Meter Durchmesser haben können und die entsprechend schwer sind, zu montieren und im Bedarfsfalle auch reparieren zu können. Ab einem gewissen Lagerdurchmesser wird die Handhabung der Ringe sehr schwierig und ist auch mit Spezialkranen kaum noch zu bewerkstelligen. In Windenergieanlagen wird üblicherweise eine Lagerung mit zwei einreihigen Lagern eingesetzt, die nicht direkt auf dem Mast repariert und ausgetauscht werden können. Vielmehr ist ein Abbau der Anlage notwendig, wenn ein Wechsel der Lagerung notwendig wird.

Die von den Herstellern und Betreibern von Windenergieanlagen angestrebte Gebrauchsdauer von 20 Jahren ist jedoch ohne Lagerwechsel nicht zu erreichen. Damit wird der Einsatz teurer Krananlagen notwendig, wenn ein Austausch der Lagerung direkt auf dem Mast notwendig wird. Zusätzlich muss der schwere Rotor der Windenergieanlage bei der Demontage der Lagerung gegen Abheben infolge hoher Windkräfte abgestützt werden, was einen hohen Aufwand darstellt.

Der Erfindung liegt daher die **Aufgabe** zugrunde, ein Lager der eingangs genannten Art derart weiterzuentwickeln, dass es möglich ist, auch bei sehr großen Lagerringdurchmessern eine einfache Montage des Lagers durchführen und das Lager auch mit hoher Präzision einstellen zu können. Weiterhin soll es insbesondere möglich sein, bei der Lagerung großer Windenergieanlagen in einfacher Weise eine Reparatur des Lagers durchführen zu können.

Die **Lösung** dieser Aufgabe durch die Erfindung ist dadurch gekennzeichnet, dass mindestens einer der Ringe mindestens vier Segmente aufweist, wobei mindestens einem der Segmente Mittel zugeordnet sind, mit denen das Segment in radialer Richtung verstellt werden kann, wobei die Mittel einen Exzenter aufweisen, der zwischen dem Segment und dem dieses aufnehmenden Gehäuse wirkt.

Durch das erfindungsgemäße Vorsehen von mindestens vier Segmenten pro Lagerring wird in Kombination mit den radialen Einstellmitteln erreicht, dass auch sehr große Lager, insbesondere solche von Windenergieanlagen, zum einen in relativ einfacher Weise montiert und zum anderen auch - durch Austausch einzelner Segmente - repariert werden können. Das vorgeschlagene Konzept stellt hinsichtlich des Aufbaus und der Wartung bzw. Reparatur einer Lagerung einer Windenergieanlage eine gute Lösung dar, die eine Vielzahl heute bekannter Probleme löst. Das Segmentlager kann individuell bezüglich Radial- und Axialluft eingestellt, einzeln ausgetauscht und gewartet werden. Ein Ausbau des gesamten Lagers ist nicht notwendig. Die Lageraustauscharbeiten können direkt auf dem Mast der Windenergieanlage durchgeführt werden. Insbesondere sind keine speziellen Maßnahmen zur Sicherung des Rotors der Windenergieanlage erforderlich; die Welle des Rotors bleibt beim Austausch einzelner Segmente fixiert.

Bevorzugt weisen sowohl der Außenring als auch der Innenring jeweils mindestens vier Segmente auf. Jedes Segment hat dabei bevorzugt separate Mittel zum Einstellen der radialen Richtung.

Der Exzenter kann das diesen aufnehmende Gehäuse in Lagerachsrichtung durchsetzen. Weiterhin kann vorgesehen sein, dass das Gehäuse den Innen- oder Außenring seitlich und an der der Laufbahn des Innen- oder Außenrings abgewandten Seite umschließt.

Der Exzenter hat mit Vorteil außerhalb des diesen aufnehmenden Gehäuses angeordnete Mittel zum Drehen; diese Mittel können mit einer Skala zusammenwirken, an der die erfolgte radiale Verstellung des Segments abgelesen werden kann.

Durch die Verstellung kann sowohl die Lagerluft eingestellt, als auch ein Versatz zwischen Innen- und Außengehäuse ausgeglichen werden. Wird das in Rede stehende Lager bei einer Windenergieanlage eingesetzt, wird dadurch ermöglicht, dass der Spalt zwischen Rotor und Stator des Generators eingestellt werden kann; die Leistung des Generators kann damit verbessert werden.

Schließlich kann vorteilhafterweise vorgesehen sein, dass zwischen der seitlichen Außenfläche eines der Innen- oder Außenringe und der seitlichen Innenfläche des Gehäuses im montierten Zustand des Lagers ein Spalt vorliegt.

Mit der vorgeschlagenen Ausgestaltung wird ein Großlager geschaffen, das auch bei sehr großen Abmessungen der Lagerringe in relativ einfacher Weise montiert und im gegebenen Falle repariert werden kann. Hierzu braucht das Lager nur in eine solche Position gedreht zu werden, in der das zu wechselnde Lagersegment aus der Lastzone herausgedreht ist; anschließend kann das Lagersegment demontiert, ein neues Lagersegment montiert und durch die Mittel zum radialen Einstellen in seine benötigte exakte Endposition gebracht werden.

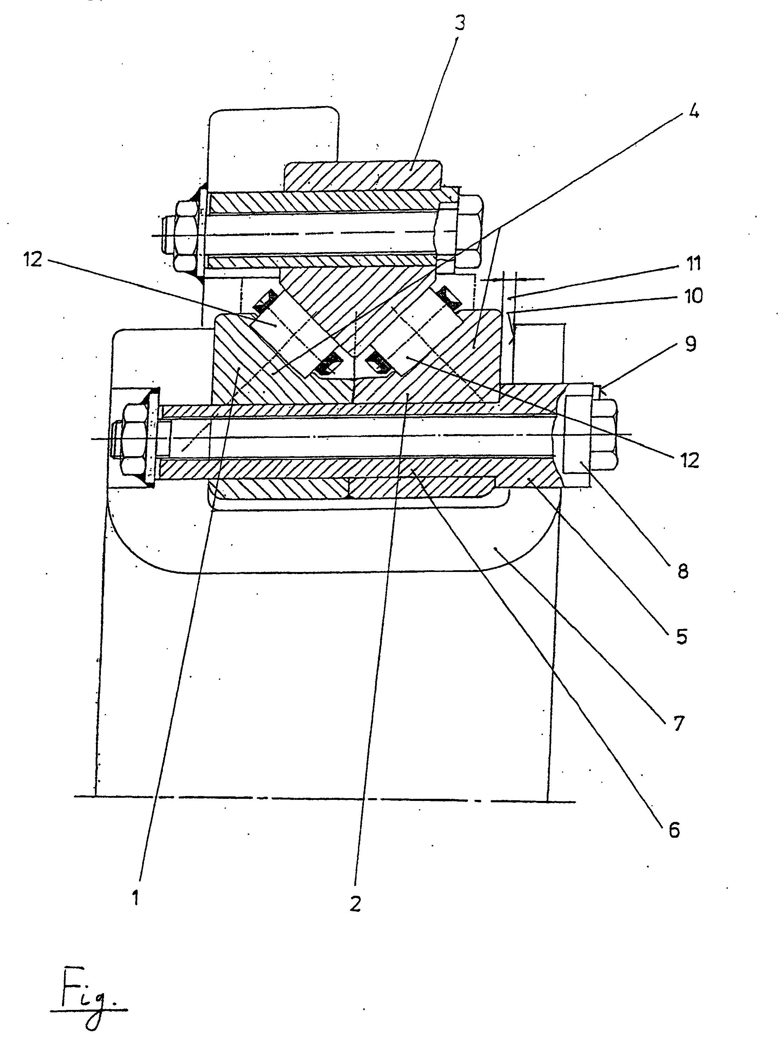

In der Zeichnung ist ein Ausführungsbeispiel der Erfindung dargestellt.

Die einzige Figur zeigt den Radialschnitt durch einen Teil eines Großlagers für eine Windenergieanlage und schematisch das den Innenring umgebende Gehäuse.

Das Lager zur Lagerung eines Rotors einer großen Windenergieanlage besteht aus einem zweiteiligen Innenring 1 und 2 und einem Außenring 3. Zwischen Innen-und Außenringen sind leicht kegelige Wälzkörper 12 angeordnet. Alle Ringe 1, 2, 3 bestehen aus jeweils vier Segmenten 4 (nicht dargestellt), die jeweils einen Umfangsabschnitt von 90° bilden.

Zur genauen radialen Einstellung des Segments 4 sind Mittel 5 vorgesehen, diese haben einen Exzenter 6, der in einem Gehäuse 7 angeordnet ist. Durch ein Mittel 8 zum Drehen (Schraubenkopf) kann der Exzenter 6 gedreht und damit die Segmente 4 des Innenrings 1, 2 in radiale Lagerrichtung bewegt werden.

Über eine Skala 9, die nur sehr schematisch dargestellt ist, kann eine nicht dargestellte Markierung an der Seite des Gehäuses 7 so weit gedreht werden, bis die gewünschte radiale Zustellung erreicht ist.

Das Gehäuse 7 ist im vorliegenden Falle im Querschnitt U-förmig ausgebildet. Es umfasst also die beiden Teile 1 und 2 des Innenrings. Zwischen der seitlichen Innenfläche 10 des Gehäuses 7 und der Seitenfläche des in der Figur rechts dargestellten Innenrings 2 ist ein Spalt 11 vorgesehen, der es ermöglicht, durch Lösen der Schraube im Exzenterbolzen den Exzenter 6 und das Segment 4 des Innenrings 2 axial soweit zu verschieben, dass ein Lagersegment herausgenommen werden kann. Dadurch ist es möglich, nach dem Lösen der Schrauben eines Außenring-Segments das Segment soweit axial zu verschieben, dass es aus der Zentrierung im Gehäuse 7 gebracht und somit radial nach außen entfernt werden kann. Nach dem Entfernen eines Außenring-Segments können die Innenring-Segmente ebenfalls entfernt werden. In entsprechender Weise können neue Segmente 4 eingebaut werden.

### Bezugszeichenliste

- 1,2: Innenring
- 3: Außenring
- 4: Segmente
- 5: Mittel zum radialen Einstellen
- 6: Exzenter
- 7: Gehäuse
- 8: Mittel zum Drehen
- 9: Skala
- 10: seitliche Innenfläche des Gehäuses
- 11: Spalt
- 12: Wälzkörper

## Patentansprüche

1. Lager, insbesondere Wälzlager, mit
- mindestens einem Innenring (1,2) und
- mindestens einem Außenring (3),
wobei mindestens einer der Ringe (1, 2, 3) durch Segmente (4) gebildet wird, **dadurch gekennzeichnet, dass** mindestens einer der Ringe (1, 2, 3) mindestens vier Segmente (4) aufweist, wobei mindestens einem der Segmente (4) Mittel (5) zugeordnet sind, mit denen das Segment (4) in radialer Richtung verstellt werden kann, wobei die Mittel (5) einen Exzenter (6) aufweisen, der zwischen dem Segment (4) und dem dieses aufnehmenden Gehäuse (7) wirkt.

2. Lager nach Anspruch 1, **dadurch gekennzeichnet, dass** sowohl der Innenring (1, 2) als auch der Außenring (3) jeweils mindestens vier Segmente (4) aufweist.

3. Lager nach Anspruch 1 oder 2, **dadurch gekennzeichnet, dass** jedes Segment (4) separate Mittel (5) zum Einstellen in radialer Richtung aufweist.

4. Lager nach einem der Ansprüche 1 bis 3, **dadurch gekennzeichnet, dass** der Exzenter (6) das diesen aufnehmende Gehäuse (7) in Lagerachsrichtung durchsetzt.

5. Lager nach einem der Ansprüche 1 bis 4, **dadurch gekennzeichnet, dass** das Gehäuse (7) den Innen- oder Außenring (1, 2, 3) seitlich und an der der Laufbahn des Innen- oder Außenrings (1, 2, 3) abgewandten Seite umschließt.

6. Lager nach einem der Ansprüche 1 bis 5, **dadurch gekennzeichnet, dass** der Exzenter (6) außerhalb des diesen aufnehmenden Gehäuses (7) angeordnete Mittel (8) zum Drehen aufweist.

7. Lager nach Anspruch 6, **dadurch gekennzeichnet, dass** die Mittel zum Drehen (8) mit einer Skala (9) zusammenwirken, an der die erfolgte radiale Verstellung des Segments (4) abgelesen werden kann.

8. Lager nach einem der Ansprüche 1 bis 7, **dadurch gekennzeichnet, dass** zwischen der seitlichen Außenfläche eines der Innen- oder Außenringe (1, 2, 3) und der seitlichen Innenfläche (10) des Gehäuses (7) im montierten Zustand des Lagers ein Spalt (11) vorliegt.

9. Lager nach einem der Ansprüche 1 bis 8, **dadurch gekennzeichnet, dass** es in einer Windenergieanlage angeordnet ist.

## Claims

1. Bearing, in particular roller bearing, having
- at least one inner ring (1, 2) and
- at least one outer ring (3),
wherein at least one of the rings (1, 2, 3) being formed by segments (4),
**characterized in**
**that** at least one of the rings (1, 2, 3) exhibits at least four segments (4), wherein at least one of the segments (4) has means (5) by which the segment (4) can be adjusted in radial direction wherein the means (5) exhibit a cam (6), which functions between the segment (4) and the housing (7) accommodating it.

2. Bearing according to claim 1, **characterized in that** the inner ring (1, 2) as well as the outer ring (3) exhibits at least four segments (4).

3. Bearing according to claim 1 or 2, **characterized in that** each segment (4) exhibits separate means (5) for setting in radial direction.

4. Bearing according to one of claims 1 to 3, **characterized in that** the cam (6), in the axial direction of the bearing, penetrates the housing (7) accommodating this.

5. Bearing according to one of claims 1 to 4, **characterized in that** the housing (7) encloses the inner or outer ring (1, 2, 3) laterally and on the side opposite the raceway of the inner or outer ring (1, 2, 3).

6. Bearing according to one of claims 1 to 5, **characterized in that** the cam (6) exhibits means (8) for turning, arranged outside of the housing (7) accommodating this.

7. Bearing according to claim 6, **characterized in that** the means for turning (8) cooperate with a dial (9) on which the resultant radial setting of the segments (4) can be read.

8. Bearing according to one of claims 1 to 7, **characterized in that** there is a gap (11) in the mounted state of the bearing between the lateral outer surface of one of the inner or outer rings (1, 2, 3) and of the lateral inner surface (10) of the housing (7).

9. Bearing according to one of claims 1 to 8, **characterized in that** it is arranged in a wind power plant.

## Revendications

1. Palier, en particulier palier de roulement, qui comprend
- au moins une bague interne (1, 2) et
- au moins une bague externe (3)
avec au moins une des bagues (1, 2, 3) constituée par des segments (4), **caractérisé en ce qu'**au moins une des bagues (1, 2, 3) comprend au moins quatre segments (4) et au moins à l'un de ceux-ci sont associés des moyens (5) par lesquels le segment (4) peut être déplacé en direction radiale, ces moyens (5) comprenant un excentrique (6) agissant entre le segment (4) et le boîtier (7) dans lequel il est logé.

2. Palier selon la revendication 1, **caractérisé en ce qu'**à la fois la bague interne (2) et la bague externe (3) sont constituées chacune de quatre segments (4).

3. Palier selon la revendication 1 ou 2, **caractérisé en ce que** chaque segment (4) présente des moyens séparés (5) pour son réglage en direction radiale.

4. Palier selon une des revendications 1 à 3, **caractérisé en ce que** l'excentrique (6) traverse, selon la direction de l'axe de palier, le boîtier (7) dans lequel il est logé.

5. Palier selon une des revendications 1 à 4, **caractérisé en ce que** le boîtier (7) entoure la bague interne ou la bague externe (1, 2, 3) latéralement et le long de la face de cette bague qui est éloignée de la piste de roulement de la bague interne ou externe (1, 2, 3).

6. Palier selon une des revendications 1 à 5, **caractérisé en ce que** l'excentrique (6) présente, pour le faire tourner, des moyens (8) situés à l'extérieur du boîtier (7) dans lequel il est logé.

7. Palier selon la revendication 6, **caractérisé en ce que** les moyens de rotation (8) coopèrent avec une échelle (9) sur laquelle peut être lu le déplacement radial du segment (4) qui a été produit.

8. Palier selon une des revendications 1 à 7, **caractérisé en ce qu'**entre la surface externe latérale d'une des bagues internes ou externes (1, 2, 3) et la surface latérale interne (10) du boîtier (7) existe une fente (11), quand le palier est monté.

9. Palier selon une des revendications 1 à 8, **caractérisé en ce qu'**il est monté dans une installation utilisant l'énergie du vent.
